(19) Europäisches Patentamt
European Patent Office
Office européen des brevets

(11) **EP 2 324 911 A2**

(12) **EUROPÄISCHE PATENTANMELDUNG**

(43) Veröffentlichungstag:
**25.05.2011 Patentblatt 2011/21**

(51) Int Cl.:
**B01J 19/00** *(2006.01)* **B01L 3/00** *(2006.01)*
**B01L 3/02** *(2006.01)*

(21) Anmeldenummer: **11001590.6**

(22) Anmeldetag: **16.10.2000**

(84) Benannte Vertragsstaaten:
**AT BE CH CY DE DK ES FI FR GB GR IE IT LI LU MC NL PT SE**

(30) Priorität: **15.10.1999 DE 99149735**

(62) Dokumentnummer(n) der früheren Anmeldung(en) nach Art. 76 EPÜ:
**00981146.4 / 1 230 013**

(71) Anmelder: **Max-Planck-Gesellschaft zur Förderung der Wissenschaften e.V.**
**80539 München (DE)**

(72) Erfinder:
• **Eickhoff, Holger**
**27211 Bassum (DE)**

• **Nordhoff, Eckhard**
**14195 Berlin (DE)**
• **Franzen, Jochen**
**28359 Bremen (DE)**
• **Schürenberg, Martin**
**27412 Tarmstedt (DE)**

(74) Vertreter: **Bohmann, Armin K.**
**Bohmann**
**Anwaltssozietät**
**Nymphenburger Straße 1**
**80335 München (DE)**

Bemerkungen:
Diese Anmeldung ist am 25-02-2011 als Teilanmeldung zu der unter INID-Code 62 erwähnten Anmeldung eingereicht worden.

(54) **Prozessieren von Proben in Lösungen mit definiert kleiner Wandkontaktfläche**

(57) Die vorliegende Erfindung betrifft ein Verfahren für das Prozessieren von Probenmolekülen in kleinen Mengen von Flüssigkeiten, dadurch gekennzeichnet, dass das Prozessieren in Tröpfchen stattfindet, die frei auf lyophilen Ankern einer ansonsten lyophoben Trägeroberfläche stehen oder an ihnen hängen.

EP 2 324 911 A2

**Beschreibung**

Die Erfindung betrifft das Prozessieren von kleinsten Probenmengen, also das Ausführen von chemischen oder enzymatischen Reaktionen, von Aufreinigungen oder von analytischen Untersuchungen, in kleinsten Flüssigkeitsmengen in der Größenordnung von einem Mikroliter und darunter, insbesondere für sehr große Anzahlen von Proben in simultanen Prozessen.

Die Erfindung besteht darin, die bei kleinsten Flüssigkeitsmengen disproportional wachsenden Behälterwandkontaktflächen mit ihren größtenteils schädlichen Einflüssen durch die Verwendung von stehenden (oder hängenden) Tröpfchen als Mikroreaktoren für das Prozessieren zu verringern, wobei die Tröpfchen auf benetzungsfreundlichen (lyophilen) Ankern in ansonsten benetzungsfeindlichen (lyophoben) Oberflächen aufsitzen und daher eine wohldefinierte Wandkontaktfläche besitzen. Die Anker können in gewünschter Weise passiviert oder auch oberflächenaktiv gemacht werden, letzteres, um bestimmte Prozessierungsschritte zu unterstützen. Es ist auch möglich, elektrische, optische, fluidische oder andere mikrostruktierte Elemente in den Träger zu integrieren, um das Prozessieren zu unterstützen. Die Erfindung betrifft das grundlegende Verfahren der Prozessierung im aufsitzenden Tröpfchen und entsprechend ausgestaltete Träger.

*Stand der Technik*

Es ist charakteristisch für die moderne Biochemie und Molekularbiologie, dass Proben zu Hunderten öder sogar Tausenden simultan prozessiert werden. Unter "Prozessieren" soll hier ganz allgemein das Ausführen von chemischen oder enzymatischen Reaktionen, von physikalischen Veränderungen wie Ausfällen oder Binden an Teilchen oder Oberflächen, von pHgesteuerten, elektrochemischen oder thermischen Veränderungen wie beispielsweise Denaturierung von DNA, von Beseitigen von Lösungsbestandteilen durch Waschungen oder Ionenaustausch bis hin zu analytischen Untersuchungen vielfältigster Art verstanden werden. Es kann sich dabei um eine einzige komplexe Probe handeln, die gleichzeitig vielen verschiedenartigen Prozessierungen unterworfen wird, beispielsweise Tausenden von verschiedenartigen SNP-Analysen (SNP = Single Nucleotide Polymorphism), um eine detaillierte Genotypisierung zu erhalten. Es kann sich aber auch um Tausende von verschiedenartigen Proben handeln, die simultan, doch voneinander streng getrennt einem einzigen Prozessierungsverfahren unterworfen werden. Beispielsweise können Tausende von Gewebeproben verschiedener Herkunft auf ein einziges, fehlgebildetes Protein hin untersucht werden, um eine bestimmte Krankheit in vielen Patienten simultan zu diagnostizieren. Auch Mischformen sind möglich, charakteristisch bleibt aber das simultane, vielspurige Prozessieren.

Ein sichtbarer Exponent dieser Entwicklung ist die sogenannte Mikrotiterplatte mit ihren zunächst 96, dann 384 und jetzt 1536 Reaktionsgefäßen. In jüngster Zeit wurde eine Nano-Well™-Platte mit 3456 Reaktionsgefäßen vorgestellt. Eine Erhöhung dieser Anzahl ist nur eine Frage der Zeit und der zur Verfügung gestellten Werkzeuge für das Prozessieren. Für die bisher üblichen Mikrotiterplatten sind entsprechende Pipettier- und Bearbeitungsroboter mit Ablagesystemen für viele Mikrotiterplatten, mit Multipipettenköpfen und Mehrfachdispensersystemen entwickelt worden.

Ein anderer sichtbarer Exponent ist die Entwicklung von Prozessierungs-Chips, die sich die Entwicklung elektronischer Mikrochips mit ihrer zunehmenden Beherrschung von Mikrostrukturen auch für die Miniaturisierung der biochemischen Prozessierung zunutze macht. Die Entwicklung hier ist vielfältig, vom relativ einfachen Aufbringen von Tausenden von immobilisierten Reaktionspartnern wie DNA-Fragmenten oder Antikörpern bis hin zu miniaturisierten Laboratorien auf den Chips (so genannte "Lab-on-the-chip"-Technologie).

Als Beispiel sei hier die Entwicklungen von DNA-Chips zur hochparallelen Genexpressionsanalyse oder für die klinische Diagnose genannt. Solchen Chips wird in der nahen Zukunft eine besonders hohe wirtschaftliche Bedeutung zugemessen. In den USA wird für DNA-Chips ein Marktvolumen von über eine Milliarde Dollar bereits für das Jahr 2001 erwartet. Es ist zu erwarten, dass in naher Zukunft auch Proteinchips hergestellt werden, die verglichen mit DNA eine größere Funktionalität aufweisen. Naheliegende Anwendungen sind hier Antikörperchips für die schnelle und multiple Krankheitsdiagnose. Für Proteinchips ist ein ebenbürtiger, wenn nicht noch größerer Markt zu erwarten, wie für DNA-Chips.

Die benötigten Mengen an Probenmolekülen für die chemische, enzymatische und analytische Prozessierung sind dabei immer geringer geworden, die Prozessierung ist längst vom Nanomolbereich in den Pico-, Femto- und sogar Attomolbereich vorgedrungen. Nachteilig ist aber, dass mit der fortschreitenden Verkleinerung der prozessierten Flüssigkeitsmengen der relative Wandanteil der umschließenden Cavitäten in Bezug auf das Volumen immer größer wird. Damit werden chemische und physikalische Einflüsse der Cavitätswände auf das Prozessierungsgeschehen immer kritischer. Ein einziger Quadratmillimeter Wand kann ein volles Picomol an biochemischem Analyt in einer monomolekularen Schicht adsorptiv binden und unter ungünstigen Umständen der weiteren Behandlung vollständig entziehen.

Die Ausbildung der Oberflächen von biochemischen Gerätschaften ist entscheidend für den analytischen Erfolg in der biochemische Spurenanalytik. Als ein Beispiel für den störenden Einfluss adsorptiver Gefäßwände sei hier die massenspektrometrische Analyse eines Proteins aus einer Trennung durch 2-dimensionale Gel-Elektrophorese angeführt, jedoch herrschen nicht nur in der Proteomik, sondern auch in den weiteren Gebieten der Genetik und der Metabolomik ähnliche Verhältnisse.

Die Proteine werden nach ihrer Trennung im Gel angefärbt, kleine Gelstücke mit dem Protein von Interesse werden um den Färbepunkt herum ausgeschnitten oder ausgestanzt. Die Gelstücke werden in ein kleines Gefäß gegeben und dort entfärbt. Auffüllen mit einer Enzymlösung (beispielsweise Trypsin) führt zu einem gezielten Verdau an durch das Enzym vorgegebenen Schnittstellen. Die Verdaupeptide haben bei Anwendung von Trypsin ein mittleres Molekulargewicht von etwa 1000 atomaren Masseneinheiten. Diese Peptide können im Gel diffundieren, sie wandern durch Diffusion langsam aus dem Gel in die umgebende Flüssigkeit und können, nach Entnahme einer Flüssigkeitsmenge und Übertragung auf einen Probenträger, massenspektrometrisch untersucht werden.

Dabei interessieren nicht nur die sehr konzentriert vorkommenden Proteine, die in Mengen von etwa 10 bis 100 Picomol im Gel enthalten sind. Es interessieren häufig besonders die Proteine kleiner Konzentrationen, die nur mit 10 bis 100 Femtomol vorhanden sind. Wenn nun ein Verdaupeptid von beispielsweise 20 Femtomol Menge in 20 Mikroliter umgebende Flüssigkeit austritt, werden die einzelnen Verdaumoleküle dabei in der Flüssigkeit umherschwimmen und dabei auch mit der Wand des Gefäßes in Berührung kommen. Diese Flüssigkeitsmenge von 20 Mikrolitern hat in einem kleinen Gefäß von etwa drei Millimetern Durchmesser eine Wandberührungsfläche von etwa 40 Quadratmillimetern. Ist diese Wand adsorptiv für eines der Verdaupeptide, so kann sie sich leicht monomolekular mit diesem Verdaupeptid bedecken. Dabei kann sie in einer einzigen monomolekularen Bedeckungsschicht insgesamt etwa 40 Picomol an Verdaupeptid des Molgewichts von 1000 atomaren Masseneinheiten aufnehmen, also etwa das 2000-fache dessen, was in unserem Beispiel überhaupt in der Lösung zur Verfügung steht. Selbst wenn die Adsorptivität der Gefäßwand durch geeignete Maßnahmen auf ein Tausendstel reduziert werden könnte, würde immer noch das interessierende Verdaupeptid vollständig adsorbiert werden können, und es wäre durch keine Maßnahme mehr wieder in Lösung zu bringen.

Das hier gerechnete Beispiel von 20 Mikrolitern Probelösung betrifft aber eine Probenmenge, die heute als groß erachtet wird. Geht man auf einen Mikroliter oder sogar 100 Nanoliter über, so steigen die Einflüsse der Wandkontakte nochmals dramatisch an.

Es ist eine oft gehörte Meinung, die Adsorptivität einer Wand könne durch Hydrophobisierung herabgesetzt werden. Das ist falsch. Für die Herabsetzung der Adsorptivität genügt es nicht, die Oberfläche benetzungsabweisend (hydrophob) für die Analytlösung zu machen, im Gegenteil, die Hydrophobie bindet hydrophobe und amphiphile Analytmoleküle in größerem Maße.

Die zwanzig Aminosäuren, aus denen alle Proteine bestehen, haben ganz verschiedenartige Eigenschaften. Drei der Aminosäuren sind basisch, zwei sind sauer, sieben sind zwar chemisch neutral, aber durch OH-, SH- oder $CONH_2$-Gruppen hydrophil. Acht Aminosäuren aber, also 40 % aller Aminosäuren, sind neutral und hydrophob. Sie haben alkylierte oder aromatische Seitenketten und zeigen lipophilen Charakter.

Die Verdaupeptide unseres Beispiels werden einen mehr oder weniger großen Anteil an diesen hydrophoben Aminosäuren enthalten. Befinden sich mehrere hydrophobe Aminosäuren nebeneinander in der Polymerkette des Peptids, so zeigt sich hier eine deutlich überwiegende Hydrophobie, oder zumindest eine Amphiphilie mit tensidem Charakter. Diese Peptide binden sich entweder durch sogenannte "hydrophobe Bindungen" aneinander und hydrophilisieren sich so gegenseitig nach außen (was bei den geringen Konzentrationen in nur sehr geringem Maße eintritt) oder sie sammeln sich (wie Tenside) bevorzugt an der Oberfläche der Lösungsflüssigkeit. Treffen sie auf eine hydrophobe Wandfläche, so werden sie auch hier durch hydrophobe Bindungen adsorbiert. Dieser Effekt ist die Grundlage der hydrophoben Assoziations-Chromatographie.

Für diese hydrophoben Analytpeptide ist es besser, ein Gefäß mit stark benetzbarer Oberfläche zu benutzen, also eine eher stark hydrophile Oberfläche. Diese Oberfläche ist in der Regel mit ziemlich fest gebundenen Wassermolekülen belegt. Es besteht daher auch nicht die Gefahr einer Adsorption von hydrophilen Analytmolekülen, zumal diese in der Regel auch in der Lösung mit Wassermolekülen umgeben sind. Gefäße mit hydrophilen Oberflächen bieten aber die Gefahr von Randverschmutzungen an der Grenzfläche des Flüssigkeitsspiegels. Die hydrophile Oberfläche führt zu sich ständig ausweitender Benetzung, zu einem Kriechen der Flüssigkeit. Durch Volumenveränderungen, beispielsweise durch leichtes Eintrocknen, kann es hier zu Ablagerungen, Auskristallisationen, Verkrustungen und anderen Randerscheinungen kommen, denen vernünftig nur durch laufend steigende Flüssigkeitsmengen während des Prozessierens zu begegnen ist. Gerade für das Prozessieren von immer kleineren Probenmengen in immer kleineren Flüssigkeitsmengen sind diese Randerscheinungen sehr nachteilig.

*Aufgabe der Erfindung*

Es ist die Aufgabe der Erfindung, Verfahren und Vorrichtungen für das Prozessieren von Proben in kleinen Flüssigkeitsmengen von etwa einem Mikroliter und darunter zu finden, die die Gefäßwandkontaktflächen in ihrer Größe sehr klein halten, dabei aber diese Flächen unabhängig von Schwankungen des Flüssigkeitsvolumens exakt definieren, und es so erlauben, diese kleinen Gefäßwandkontaktflächen durch Oberflächenpräparationen definiert in die Prozessierung einbeziehen zu können.

*Kurze Beschreibung der Erfindung*

Die Erfindung bezieht sich auf Verfahren und Vorrichtungen für das Prozessieren von Probenmolekülen in kleinen Mengen von Flüssigkeiten. Die Erfindung besteht in einem ersten Aspekt darin, die Probe in einem Tropfen zu prozessieren, der frei auf einem benetzungsfreundlichen (hier ganz allgemein als lyophil bezeichneten) Anker in einer benetzungsfeindlichen (lyophoben) Umgebung einer Unterlage steht oder an ihm hängt. In einem weiteren, zweiten Aspekt betrifft die Erfindung die Durchführung von Reaktionen, insbesondere chemischen und biologischen Reaktionen, in der flüssigen Phase unter Verwendung der erfindungsgemäßen Verfahren und Vorrichtungen.

Der durch Oberflächenspannung zusammengehaltene Tropfen, der lyophile Anker, der lyophobe Rand des Ankers und das den Tropfen umgebende Gas bilden also einen Mikroreaktor, in einer bevorzugten Ausführungsform fast wandfreien Mikroreaktor für das Prozessieren. Die Unterlage wird hier Träger genannt. Der Träger kann beispielsweise eine Platte in Größe einer Mikrotiterplatte, aber auch ein Chip sein, beispielsweise auf Silizium-, Glas-, oder Kunststoffbasis. Der Chip kann neben den Ankern auch elektronische, fluidische oder andere mikrostrukturierte Elemente enthalten. Bei richtiger Wahl des Tröpfchenvolumens, der Ankergröße, und des Lyophobie-Unterschiedes zwischen Anker und Umgebung benetzt das Tröpfchen sehr scharf nur den Anker, nicht aber die lyophobe Umgebung. Im Gegensatz zur Lever-Methode eines frei schwebenden Tröpfchens existiert bei dem erfindungsgemäßen Verfahren eine kleine, definiert große und definiert benetzte Wandfläche, die durch geeignete Funktionalisierung in die Prozessierung einbezogen werden und bestimmte Aufgaben übernehmen kann.

Die Erfindung betrifft sowohl das Verfahren der Prozessierung im aufsitzenden Tropfen wie auch die Träger mit lyophilen Ankern bestimmter Belegungs- und Ausführungsarten in lyophober Umgebung als Vorrichtung für dieses Prozessieren. Der Anker ist dabei bevorzugt ein ebener Teil einer ebenen Oberfläche des Trägers, kann aber auch für besondere Zwecke eine konvexe oder konkave Form haben. Generell ist auch eine Ausbildung des Ankers als dreidimensionale Struktur im Rahmen der vorliegenden Erfindung. Diese dreidimensionale Struktur kann dabei sowohl als eine Erhöhung als auch als eine Vertiefung gegenüber der den Anker umgebenden Trägeroberfläche ausgebildet sein. Wesentlich für die Erfindung ist die Konstanz der Benetzungsfläche, die durch den Anker vorgegeben ist. (Träger mit hydrophilen Ankern in hydrophober Umgebung für das Aufbringen von MALDI-Proben für die Massenspektrometrie, jedoch ohne jedes chemisch-physikalische Prozessieren außer Trocknen, sind aus DE 197 54 978 bekannt. Eine Belegung der hydrophilen Anker mit Ionenaustauschern ist als DE 199 23 761 angemeldet.)

Es kann auf einem Träger eine außerordentlich hohe Anzahl an erfindungsgemäßen Mikroreaktoren für die Prozessierung untergebracht werden. Selbst bei relativ großen Volumina von 500 Nanolitern, die Tropfen mit etwa einem Millimeter Durchmesser ergeben, können auf einem Träger der Größe einer Mikrotiterplatte mit einem Rasterabstand von 1,5 Millimetern 3456 Tropfen untergebracht werden. Moderne Piezodispenser können aber wohl definierte Tröpfchen wesentlich geringerer Volumina erzeugen, so dass auch noch wesentlich höhere Tröpfchendichten erreichbar sind. Mit Tröpfchen von je 170 Nanolitern, die einen Durchmesser von etwa 0,7 Millimetern haben, ist bei 1,125 Millimeter Rasterabstand eine Belegung mit 6144 Mikroreaktoren möglich.

Nach erstem Probenauftrag erfolgt die weitere Zugabe von Substanzen wie Lösungsmitteln, Reaktionslösungen oder Regulationssubstanzen vorzugsweise berührungslos, um zusätzliche Wandkontakte und damit verbundene Störungen auszuschließen. Hierfür eignen sich prinzipiell folgende Methoden: (a) die Zugabe von beliebigen Lösungen durch berührungsloses Dispensieren, (b) die Zugabe reinen Lösungsmittels mittels Kondensation aus übersättigter Dampfphase durch den Einsatz einer Feuchtigkeitskammer oder eines unten beschriebenen Verteilerdeckels, (c) die Zugabe von gasförmigen Reaktanten oder Regulationssubstanzen aus der umgebenden Gasphase, und (d) die Zugabe von Reaktionslösungen oder Lösungsmitteln durch einfaches Aufsprühen, wobei sich die Flüssigkeit von den lyophoben Flächen auf die lyophilen Flächen und somit zu den Probentröpfchen zurückzieht. Bei Mikrodispensern werden analog zur Tintenstrahldrucktechnik kleinste Flüssigkeitstropfen berührungslos auf das Zielsubstrat plaziert, wobei sich wohldefinierte Tröpfchen mit Volumina von etwa 50 bis 100 Picoliter erzeugen lassen. Nicht berührungsfreies Auftragen kann (e) durch einfaches Tauchen der Träger geschehen, beispielsweise um einen Grundauftrag mit Reaktanten vor dem eigentlichen Probenauftrag zu erhalten, aber auch (f) durch Vielfachpipettenköpfe, (g) durch Stempel ("Pin-Tools") oder (h) durch fluidische Schaltungen auf dem Chip, die dem Tröpfchen Flüssigkeiten durch den Anker hindurch zuführen können. Durch die unten beschriebene Kontaktübertragung von Tröpfchen von einem Träger zum anderen können auch nicht berührungsfreie Auftragungsarten auf saubere Zwischenträger ohne Verschmutzung der Pipetten, Stempel, oder fluidischen Zubringerkanäle eingesetzt werden. (Aus DE 196 28 178 ist das Aufragen von Proben mit Vielfachstempeln oder Vielfachpipetten auf MALDI-Probenträger in Mikrotiterplattengröße bekannt).

Durch vorsichtiges Umdrehen von Trägern können die dann hängenden Tropfen auch in direktem Kontakt oder durch gezieltes Abschütteln synchron von einem Träger zum anderen übertragen werden, so dass verschieden funktionalisierte Träger nacheinander oder nicht berührungsfreie Zubringersysteme ohne Verschmutzungsgefahr benutzt werden können.

Die lyophilen Anker können in vielfältiger Weise funktionalisiert werden. So können Analytmoleküle an geeignet präparierten Ankern durch Adsorption (beispielsweise an C18-präparierten Ankern), durch chemische Bindungen, durch Hybridisierung (DNA) oder durch Antikörperbindungen vorübergehend oder dauernd immobilisiert werden. Im immobilisierten Zustand können sie Reaktionen unterworfen, hybridisiert, enzymatisch verlängert oder verkürzt, oder einfach nur durch Waschen von Bestandteilen der Reaktionslösung befreit werden. Es können beispielsweise aber auch Schichten zur langsamen Abgabe von Reaktantmolekülen oder zum Fangen schädlicher Reaktionsprodukte oder bestimmter Verschmutzungen aufgebracht werden, beispielsweise können Ionenaustauscher zum Einfangen von Metallionen dienen. Die Anker können aber auch in ihrer physikalischen Ausformung in besonderer Weise für die Analyse vorbereitet sein, beispielsweise durchsichtig oder spiegelnd für spektrometrische Untersuchungen, oder sogar mit elektronischen, fluidischen, optischen und/oder mikromechanischen Elementen versehen auf einem Chip für oberflächenanalytische oder optische Verfahren.

Die Tröpfchen können in gesättigtem Lösungsmitteldampf über längere Zeit vor dem Eintrocknen bewahrt werden. Mit eng schließenden Deckeln lassen sich die Träger auch inkubieren, oder sogar, etwa für PCR-Amplifikationen, Temperaturzyklen unterwerfen. Die Deckel können auch mit Einrichtungen für die gleichmäßige Zuführung gasförmiger Reaktant- oder Regulationssubstanzen versehen sein.

Teiltrocknungsprozesse in trockener Luft erzeugen in den Tröpfchen sehr schnelle und unregelmäßige Wirbelströmungen, diese bilden einen äußerst effektiven Mischprozess, der für die Beschleunigung von Reaktionen ausgenutzt werden kann.

Die Proben können teils in flüssigem, teils in getrocknetem Zustand in vielfältiger Weise analysiert werden, beispielsweise colorimetrisch, absorptionsspektrometrisch (auch im UV oder IR), fluoreszenzspektrometrisch, radiographisch oder massenspektrometrisch. Insbesondere können auch sehr empfindliche oberflächenanalytische Verfahren eingesetzt werden, wie beispielsweise "Surface Plasmon Resonance" oder "Surface Acoustic Waves".

Durch Trocknen oder Einfrieren können die Proben auch für längere Zeit lagerfähig gemacht werden.

Die Durchführung von Reaktionen, insbesondere chemischen und biologischen Reaktionen, in der flüssigen Phase unter Verwendung der erfindungsgemäßen Verfahren und Vorrichtungen ist in ihren verschiedenen hierin offenbarten Ausführungsformen mit einer Vielzahl von überraschenden Vorteilen verbunden und erlaubt die Durchführung von Reaktionen, die als solche bisher nicht zugänglich waren. So z.B. die Bestimmung der Interaktionen von Biomolekülen in den Tropfen. Dabei kann ein Reaktionspartner in dem Tropfen deponiert sein und ein Reaktionspartner zugegeben werden unter Verwendung der verschiedenen hierin beschriebenen Techniken wie Kontaktübertragung und dergleichen. Da es fast keine Wände gibt, an die diese Biomoleküle adsorbieren können und der Tropfen erfindungsgemäß ein kleines Volumen hat, ist die Nachweisempfindlichkeit sehr sensitiv. Es ist auch möglich, dass geringe Mengen von kostbaren oder nur in geringen Mengen zugänglichen Materialien (z.B. Proteine) in den Tropfen deponiert werden. Ein zweiter Reaktand, oder auch ein dritter, wenn beispielsweise ein Homo- oder Heteroduplex in dem Tropfen verbracht ist, kann beispielsweise mit Tintenstrahldrucktechnik ebenfalls in einem kleinen Volumen in den Tropfen eingebracht werden. Ein wesentlicher Vorteil liegt hier in der erreichbaren Empfindlichkeit, die mit gegenwärtigen Behältern in Mikrotiterplatten nicht erreichbar ist, da immer wieder Proteine Affinitäten zu Oberflächen aufweisen, und in den geringen Volumina, in denen gearbeitet werden kann.

Die geringen Screeningvolumina sind eine Gegebenheit, welche für die Pharmaindustrie von sehr großem Interesse ist, da man beispielsweise einen ganzen Assay eines High Throughput Screening Verfahrens in einem Tropfen, der nur wenige nl (normalerweise mehrere $\mu$l, typisch sind mindestens 10$\mu$l) enthält, unterbringen kann. Die kostbaren Substanzbibliotheken, werden nur in einem bestimmten Konzentrationsbereich (beispielsweise nanomolar) in einem Screening eingesetzt, da nur dann davon auszugehen ist, dass diese Substanzen oder Derivate davon auch als Wirkstoffe erfolgreich sind. In den Substanzbibliotheken sind oft, und wenn überhaupt, in gelöster Form nur wenige ml vorhanden, mit denen eine endliche Anzahl von Screeningansätzen durchgeführt werden kann. Neben allen möglichen und limitieren Adhäsionseffekten, die in dem wandoptimierten Reaktionsgefäß, wie es der hierin offenbarte Mikroreaktor darstell, nicht auftreten, bietet die in der Erfindung beschriebene Technologie die Möglichkeit, viel mehr Screeningansätze mit einer bestimmten einzelnen Substanz oder einer Substanzbibliothek durchzuführen, als dies nach dem Stand der Technik derzeit möglich ist.

Es ist im Rahmen der vorliegenden Erfindung auch möglich, das Tropfenvolumen so zu optimieren, dass nur einzelne Zellen darin enthalten sind oder immobilisiert werden können. Damit wird eine neue Einzelzellanalytik, möglich, die beispielsweise eine genaue Untersuchung von Stofftransfer aus der Lösung in das biologische System Zelle ermöglichte (Einzelzell-Volumentransport). Auch zwei Zellen und deren Kommunikation miteinander können in einem Tropfen, der nur zwei Zellen fasst (eine Zelle deponiert, eine Zelle wird dazugegeben) erfasst und studiert werden. Dabei kann die Zelle oder der Zellverband in der Lösung frei umherschwimmen. Hiermit ist auch die Möglichkeit eines Einzelzell in vivo HTS Assays gegeben. Das Volumen könnte auch eine genau definierte Anzahl Viren oder Biomolekülen, vorzugsweise Proteine oder Antikörper (auch zum Zwekke des Anfärbens bestimmter Zellbereiche), aber auch DNA und Analoge wie beispielsweise PNA (peptide nucleic acid) oder LNA (locked nucleic acid) sowie RNA oder Chemikalien, beispielsweise Wirkstoffe aus Substanzbibliotheken (z.B. Agonisten und Antagonisten für Zell-Zell-Wechselwirkungen, enthalten, die mit einer einzelnen Zelle in Kontakt treten.

Generell ist zu sagen, das in den hierin beschriebenen, wandoptimierte Behälter darstellenden Mikroreaktoren Studien möglich sind, die in herkömmlichen Wandbehältern nur sehr schwer zu erschließen sind. Das adsorptive Problem ist bereits geschildert, aber in den Behältern ist es auch möglich, Proteine in einer nativen Form zu halten und somit vollkommen funktionale Assays unter nativen Bedingungen durchzuführen, da in jedem Tropfen die nativen Bedingungen für jedes Biomolekül eingestellt werden können, da das Risiko einer Mißfaltung der Proteine, wie dies beispielsweise durch die Adsorption oder Anbindung an eine Oberfläche passieren kann, minimiert ist.

In einem weiteren Aspekt der Erfindung betrifft diese die Verwendung der erfindungsgemäßen Vorrichtung und des erfindungsgemäßen Verfahrens, insbesondere in der Ausprägung, dass diese(s) zur Durchführung von Flüssig-Flüssig-Reaktionen verwendet wird, für solche Verfahren, insbesondere Screening-Verfahren, bei denen sehr kleine Flüssigkeitsmengen verwendet werden. Sehr kleine Flüssigkeitsmengen umfassen hierin insbesondere den Bereich von 10 pl bis 10 nl sind jedoch sowohl nach oben wie nach unten nicht auf diesen Bereich beschränkt. Dieser Verwendung liegt die überraschende Erkenntnis zugrunde, dass durch den Flüssigkeitstropfen des Mikroreaktors, insbesondere wenn dieser an dem Träger hängend eingesetzt wird, als optische Linse genutzt (Linsen- oder Fokussierungseffekt) werden kann. Infolge dieser Eigenschaft kann der Mikroreaktor sowohl als Reaktionssystem als auch als Detektionssystem verstanden werden, macht er doch besonders bei der Verwendung von Licht auf der Seite des Detektionssystems weitere Vorrichtungen wie Verstärker oder Abschwächer etc. überflüssig bzw., erlaubt die Aufhebung von Grenzen der Miniaturisierung von Reaktionen wie beospielsweise Screeningverfahren, wie sie bisher infolge der Beschränktheit der Möglichkeiten des Detektionssystems bestanden haben. Typische Detektionssysteme, bei denen dieser Effekt genutzt werden kann, sind Absorptions-, Reflexions- Oberflächenplasmonresonanenresonanz- und Fluoreszenzsysteme.

Bei Verwendung der erfindungsgemäßen Vorrichtungen, d.h. des Mikroreaktors sowie des Trägers mit lyophilem Anker, bzw. dem erfindungsgemäßen Verfahren kann vorgesehen sein, dass der Schritt der Prozessierung bzw. das in dem Tropfen ablaufende Reaktionsgeschehen auch einen Trocknungsschritt umfasst. Dabei wird der Tropfen typischerweise auf der lyophoben Oberfläche eingetrocknet, so dass der Tropfen auf einen kleinen Punkt, bevorzugterweise den lyophilen Anker aufkonzentriert wird. Der Grad der Konzentrierung kann bis zum vollständigen Eintrocknen reichen. Dem Eintrocknungsschritt kann sich ein oder mehrere Reaktionsschritte anschließen, bei dem/denen das Tropfenvolumen erhöht wird, gleich bleibt oder verringert wird. Dabei können dem eingetrockneten Tropfen bzw. der/den darin enthaltenen Verbindungen weitere Verbindungen zugesetzt werden, die, beispielsweise, zu einer weiteren Reaktion, zum Nachweis, zur Stabilisierung etc. der Verbindung oder ihren Derivaten und Reaktionsprodukten führen können. Infolge der mit der Eintrocknung verbundenen Aufkonzentrierung erhöht sich ganz allgemein die Nachweisgrenze. Das den Eintrocknungsschritt umfassende erfindungsgemäße Verfahren eignet sich prinzipiell für jeden Träger mit lyophilem Anker bzw. für eine jegliche Verbindung, insbesondere auch für Biochips. Das Verfahren eignet sich des weiteren auch für Biomoleküle, die ausgewählt sind aus der Gruppe, die DNA, RNA, Analoge davon und Peptide bzw. Protein und Analoge davon umfasst. Verfahren zum Eintrocknen von Flüssigkeitstropfen sind den Fachleuten bekannt und können in Abhängigkeit von der Art der in dem Tropfen enthaltenen bzw. den diesen ausbildenden Verbindungen in geeigneter Weise bestimmt werden.

Beispielhaft sei hier die erneute Inkubierung einer auf einem Anker eingetrockneten DNA mit RNA beschrieben. Durch die gezielte Verteilung eines einzelnen RNA enthaltenden Tropfens von n x ca. 20 nl (n gleich Anzahl der Anker), auf der gesamten Fläche eines erfindungsgemäßen Trägers, wurde die auf den Anker aufgebrachte und dort eingetrocknete DNA noch einmal inkubiert bzw. diese in einem Tropfen gezielt prozessiert. Befinden sich beispielsweise 1000 Anker auf einem Träger, wird ein Tropfen von 20 $\mu$l auf den Träger aufgebracht und mit einem Spatel, der die Breite des Trägers hat, "plattgedrückt" und durch Ziehen des Spatels über den Träger auf dem Träger verteilt. Dabei werden nur die lyophilen Anker gleichmäßig benetzt und die nach dem Eintrocknen nicht vorhandenen wandoptimierten erfindungsgemäßen Reaktionsgefäße, d.h. die Mikroreaktoren, wieder hergestellt. In diesen kann nun die Hybridisierung (DNA/RNA oder DNA/DNA) als Prozessierungsschritt durchgeführt werden. Die Größe des einzelnen Tropfens und den daraus entstehenden kleinen Tropfen auf den Ankern ist im wesentlichen abhängig von der Ankergröße. Kleine Anker (100 $\mu$m) immobilisieren nur kleine Tropfen (5-20 nl), große Anker (800 $\mu$m) immobilisieren relativ große Volumina (bis 1 $\mu$l).

In einem noch weiteren Aspekt betrifft die Erfindung die Verwendung eines Festkörpers oder sogenannter "beads", d.h. Partikel, die bevorzugterweise eine Grüße zwischen 200 nm und 10 $\mu$m aufweisen und aus verschiedenen Materialien hergestellt sein können, wie beispielsweise Ca-Alginat, Stärke, Collagen, Silika, Cellulose oder Kunststoffe, in dem erfindungsgemäßen Verfahren bzw. Vorrichtung. Dabei wird insbesondere vorgesehen, dass die beads, optional auch ein bead, in die Flüssigphase des Mikroreaktors eingebracht und somit eine von Wandgefäßen unabhängige Festphasenoberfläche, bevorzugterweise mit definierten Oberflächen, bereitgestellt werden kann. Die beads liegen dabei typischerweise in einer solchen Form vor, dass sie mit einer affinen Oberfläche versehen sind und Ferromagnetismus zeigen. So können die Partikel mit Magneten im Tropfen bewegt werden, was zu einer weiteren intensiven Durchmischung des Reaktionsansatzes neben den hierin beschriebenen Mechanismen führt, was zu einem besonders effektiven Reaktionsgeschehen führt. Eine weitere Anwendung stellt dabei die Aufreinigung von Biomolekülen an entsprechend modifizierten Partikeln in den wandoptimierten Mikrobehältern dar, die unter diesen Verfahrensbedingungen hohe Ausbeuten erlaubt und besonders für sehr geringe Mengen von DNA, deren Analoga und Proteinen geeignet ist.

*Kurze Beschreibung der Abbildungen*

Aus der nachfolgenden Beschreibung der Abbildungen ergeben sich weitere Merkmale und Vorteile der Erfindung. Obwohl die Merkmale der Abbildungen in einer speziellen Ausführungsform beschrieben sind, ist ein jedes der offenbarten Merkmale unabhängig von der jeweiligen Kombination von Merkmalen der speziellen Ausfiihrungsform zu verstehen und kann somit für sich alleine genommen mit anderen Merkmalen kombiniert oder in anderen hierin offenbarten Ausführungsformen zusätzlich realisiert werden. Die Begriffe "Abbildungen" und "Figuren", abgekürzt "Fig.", werden hierin synonym verwendet.

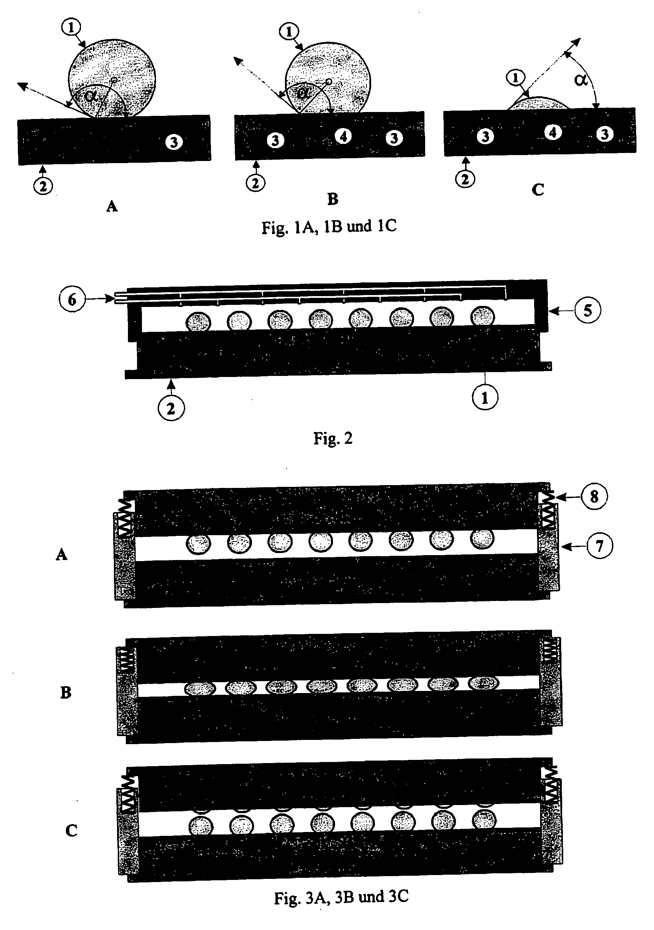

Abbildung 1A zeigt einen Tropfen (1) auf der lyophoben Oberfläche (3) eines Trägers (2) mit dem sich ausbildenden Randwinkel α. Abbildung 1B zeigt einen Tropfen (1) des selben Volumens auf einem lyophilen Anker (4), der jetzt vollkommen benetzt wird, wodurch ein kleinerer Randwinkel α gebildet wird. Dieser auf dem Anker aufsitzende Tropfen bildet den Mikroreaktor, der dem erfindungsgemäßen Verfahren zu Grunde liegt. Abbildung 1C zeigt, wie eine gut lyophile Ankerfläche auch noch vollkommen benetzt wird, wenn sich das Volumen des Tropfens (1) etwa durch Eintrocknen stark verringert hat; dabei hat sich der Randwinkel α sehr stark verändert. Diese Größenkonstanz der Wandkontaktfläche ist ein wesentliches Merkmal der Erfindung.

Abbildung 2 zeigt eine Reihe von Tropfen (1) auf lyophilen Ankern eines Trägers (2), mit einem Deckel (5), der ein Gasführungssystem (6) zur gleichmäßigen Zuführung der Gase oder Dämpfe zu den einzelnen Tropfen und zu ebenso gleichmäßiger Abführung enthält.

Abbildung 3 zeigt die gravitätsunterstützte Übertragung vieler hängender Tropfen gleichzeitig von einem oberen Träger auf einen unteren Träger. Ein Rahmen (7) führt die Träger und hält sie zunächst auf Abstand (Abbildung 3A). Das Zusammendrücken der Federn (8) im Rahmen (7) bewirkt die Kontaktnahme der Tropfen mit dem unteren Träger (Abbildung 3B). Nach vorsichtigem Entspannen der Federn (8) befindet sich der Hauptteil der Tropfen auf der unteren Platte (Abbildung 3C). Mit der Anordnung lassen sich auch stehende Tropfen übertragen, indem man die Platten erst im zusammengedrückten Zustand (wie in Abbildung 3B) umdreht. Die Sandwichanordnung nach Abbildung 3B eignet sich bei geeigneter Ausführung der Träger auch für eine Durchstrahlung der Tröpfchen, beispielsweise für absorptionsspektrometrische Messungen.

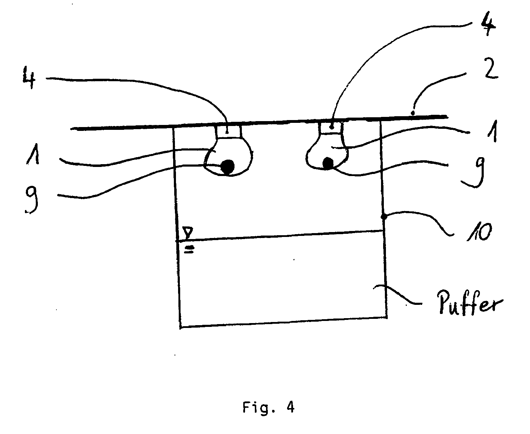

Abbildung 4 zeigt die Verwendung der erfindungsgemäßen Vorrichtung und des erfindungsgemäßen Verfahrens zur Durchführung einer Reaktion ohne Beteiligung von Oberflächen der hierin als Mikroreaktor bezeichneten Anordnung, genauer ohne Beteiligung von Oberflächen des Trägers. Bei der gezeigten Reaktion handelt es sich um Reaktion in der Flüssigphase, genauer um eine Kristallisation. Eine typische Anwendung für diesen Aspekt der Erfindung erfolgt auf dem Gebiet der structural genomics, in dem die Aufzeichnung von Röntgenbeugungsmustern an Kristallen aus Biomolekülen und die damit mögliche Strukturbestimmung ein etabliertes Verfahren darstellt. Dazu werden mit Hilfe der Dampfdruckdiffusionsmethode in stehenden oder hängenden Tropfen (1) Kristalle (9) gezüchtet. Dies geschieht durch das Pipettieren eines Tropfens (1) (typischerweise zwischen 0.2 und 20 µl) auf ein Deckgläschen, das als Träger (2) fungiert und eine Anzahl von Ankern (4) aufweist, und das Verschließen eines Behältnisses (10), der den Kristallisationspuffer enthält. Der nun typischerweise nach unten hängende Tropfen (1) enthält beispielsweise ein Protein, welches unter entsprechenden Pufferbedingungen langsam kristallisiert. In den Ausführungen nach dem Stand der Technik hängen die Tropfen dabei an nicht definierten Stellen von dem Träger (2) herunter. Will man nun die Kristallentstehung innerhalb eines Screeningexperimentes (die optimalen Kristallisationsbedingungen sind meist nicht bekannt und werden zumeist empirisch ermittelt) mit einem bildgebenden Verfahren beobachten, muss man den Tropfen (1) (und den eventuell darin enthaltenen Kristall) erst suchen, weil dieser auch auf dem unstrukturierten Träger verrutschen kann. Bei Hochdurchsatzverfahren kann dies einen limitierenden Faktor darstellen, der durch die Verwendung der erfindungsgemäßen Verfahren und Vorrichtung vermieden werden kann. Indem der Träger eine Oberfläche mit definierten Reaktionsorten aufweist, wobei Reaktionsort hierin mit Blick auf die Tatsache, dass das erfindungsgemäße Verfahren auch für flüssig-flüssig- und flüssig-gasförmige Reaktionen verwendet werden kann, nicht gleichbedeutend ist mit dem Ort des Reaktionsgeschehens an einer Oberfläche, wird somit eine Zuordnung bestimmter Reaktionsereignisse zu bestimmten Reaktionsbedingungen dann möglich, wenn verschiedene Reaktionsbedingungen an verschiedenen Reaktionsorten des Trägers realisiert wurden. Bei der Anwendung von Trägern nach dem Stand der Technik ist dies nicht möglich, da die Tropfen, in denen die Kristallisation stattfindet, nicht ortsspezifisch sind und somit eine Zuordnung nicht möglich ist.

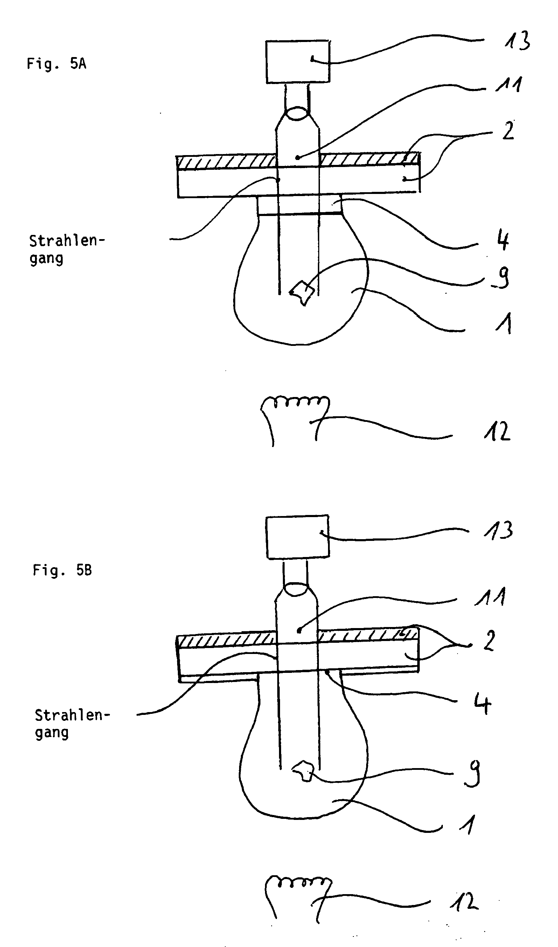

Abbildung 5 zeigt eine Ausführungsform eines weiteren der Erfindung zugrundeliegenden Aspektes, nämlich die verschiedene Ausgestaltung von Träger und Anker, die über die Unterschiede in ihrem lyophoben bzw. lyophilen Verhalten hinausgeht. Im vorliegenden Fall ist der Träger (2), der beispielsweise aus einem lyophob beschichtetem Glas besteht, so ausgestaltet, dass er eine gegenüber dem Anker andere Permeabilität für elektromagnetische Strahlung aufweist. Unter elektromagnetischer Strahlung wird hierin u.a. insbesondere Licht, bevorzugterweise sichtbares Licht, infrarotes und ultraviolettes Licht verstanden. Der Vorteil einer derartigen unterschiedlichen Durchlässigkeit insbesondere von Licht liegt darin, dass bei dem in der Biotechnologie häufig verwandten Detektionsverfahren der Fluoreszenzdetektion das optische Hintergrundsignal verringert werden kann. In der in Abbildung 5 dargestellten Ausführungsform ist derjenige Teil des Trägers (2) für Licht undurchsichtig, der keinen Anker trägt. Die Undurchsichtigkeit für Licht kann durch Einfärben wie Schwärzen des Teils des Trägers erreicht werden. Das Einfärben oder Schwärzen kann grundsätzlich u.a. durch das Aufbringen von Folien, die bevorzugt zumindest eine der folgenden Eigenschaften gelocht, nichttransparent und nichtfluoreszierend aufweist, oder durch das Auftragen eines nichttransparenten oder nicht-fluoreszierenden Lackes oder Gemisches, das eine der artige Eigenschaft aufweist, bewerkstelligt werden. Damit kommt es zur Ausbildung einer Lochblende (11), die zumindest teilweise mit dem Ankerbereich zusammenfällt und bevorzugt mit diesem identisch ist. Der ankertragende Teil des Trägers (2) ist dagegen für das Licht durchlässig, zumindest durchlässiger als der nicht-ankertragende Teil des Trägers. Es ist im Rahmen der Kenntnisse des Fachmanns, eine gegenüber dem Ankerbereich verringerte Durchlässigkeit in Abhängigkeit von der zur Detektion verwendeten Wellenlänge vorzusehen und die besagten Bereiche des Trägers entsprechend zu modifizieren. Bei dieser Ausführungsform, aber auch allgemein ist es im Rahmen der vorliegenden Erfindung, dass der Anker entweder dadurch ausgebildet wird, dass auf den lyophilen Träger eine lyophobe Schicht aufgebracht wird Abbildung (5A), die zur Ausbildung des lyophilen Ankers wieder durch die oben beschriebenen Verfahrensweisen entfernt wird, oder dadurch, dass auf den lyophoben Träger, der wie vorstehend beschrieben hergestellt werden und somit auch ein mit einer lyophoben Trägerschicht versehener lyophiler Träger sein kann, ein lyophiler Anker aufgebracht wird (Abbildung 5B). Letzteres ist beispielsweise beschrieben in DE 197 54 978, deren Offenbarungsgehalt hiermitdurch Bezugnahme aufgenommen wird. Eine Strahlenquelle 12 ist typischerweise auf derjenigen Seite des Trägers angeordnet, die den Tropfen trägt bzw. an der der Tropfen hängt. Auf der jeweils anderen Seite befindet sich das zu der Strahlenquelle korrespondierende Detektionssystem 13. Das Detektionssystem wird dabei in Abhängigkeit von den jeweiligen Reaktionsschehen, Testsystemen und/oder Strahlenquelle ausgewählt. So wird im Falle der Verwendung eines Fluoreszenzdetektionssystems das Detektionssystem insbesondere für das emittierte Fluoreszenzlicht empfindlich sein.

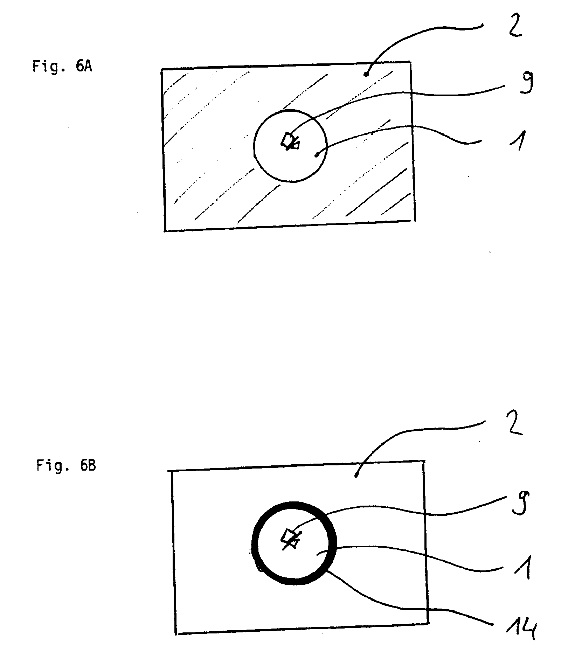

Abbildung 6A schließlich zeigt eine Aufsicht einer weiteren Ausführungsform der erfindungsgemäßen Vorrichtung und deren Anwendung in dem erfindungsgemäßen Verfahren. Dabei wird wie in Abbildung 5 ein hängender Tropfen in dem Mikroreaktor zur Durchführung einer Flüssig-Flüssig-Reaktion verwendet (wobei diese jedoch nicht darauf beschränkt ist, sondern auch eine Flüssig-Fest-Reaktion sein kann, wie dies auch für die in Abbildung 5 beschriebene Reaktion gilt; des weiteren kann auch ein stehender Tropfen verwendet werden) und der hierin ebenfalls beschriebene Fokussierungseffekt ausgenutzt. Infolge des Fokussierungseffektes käme es zur Ausbildung eines in Abbildung 6B beschriebenen ringförmigen Schattens (14) und einer ungleichmäßigen Ausleuchtung, was, in Abhängigkeit von dem jeweiligen Reaktionsgeschehen im Mikroreaktor, zu einer Beeinträchtigung der Detektion führen kann. Dies wird erfindungsgemäß dadurch vermieden, dass das in Abbildung 5 beschriebene Merkmal betreffend die Ausgestaltung der zwischen Anker-aufweisendem Teil des Trägers und Anker-freiem Teil des Trägers unterschiedlich ausgebildeten Durchlässigkeit für elektromagnetische Strahlung auch in der Ausfizhrungsform verwendet wird, bei der der Fokussierungseffekt ausgenutzt wird. Infolge der in Abbildung 6 exemplarisch als Schwärzung dargestellten verringerten Lichtdurchlässigkeit des den Anker nicht tragenden Teils des Trägers unter Ausbildung einer Lochblende wird das Zentrum des Tropfen gleichmäßig ausgeleuchtet. Infolge dieser gleichmäßigen Ausleuchtung ist eine eindeutigere bzw. zuverlässigere Aussage möglich, was insbesondere bei Anwendungen im Bereich von High Throughput - Systemen von Vorteil ist, da dadurch höhere Durchsatzzahlen erreichbar sind.

*Bevorzugte Ausführungsformen*

Sitzt ein Tropfen auf einer Oberfläche wie in Abbildung 1A mit einem Randwinkel $\alpha$ größer als 90° auf, das heißt, ist seine Benetzungsfläche kleiner als der Tropfendurchmesser, so spricht man von einer benetzungsfeindlichen Oberfläche für diese Flüssigkeit. Diese Benetzungsfeindlichkeit wird hier ganz allgemein als Lyophobie bezeichnet, in einer Erweiterung des Begriffs, wie er in der Kolloidchemie für Partikel in einer Flüssigkeit gebraucht wird. Entsprechend wird hier unter lyophil auch benetzungsfreundlich verstanden, der Randwinkel $\alpha$ ist dann kleiner als 90°.

Für eine benetzungsfeindliche Oberfläche sind die Anziehungskräfte der Moleküle der Flüssigkeit auf ein Oberflächenmolekül der Flüssigkeit größer als die Anziehungskräfte der festen Oberfläche auf dieses Molekül. Der Randwinkel $\alpha$ wird durch die Oberflächenspannungen $\sigma$ der Flüssigkeit und des Festkörpers und durch die Grenzflächenspannung $\gamma$ beschrieben:

$$\cos\alpha = \left(\sigma_{fest} - \gamma_{fest-flüssig}\right)/\sigma_{flüssig}.$$

Für sehr lyophobe Oberflächen in Bezug auf die verwendete Flüssigkeit ist die Benetzungsfläche sehr klein und der Randwinkel sehr groß, bezogen auf gleiche Tröpfchengröße ist die Benetzungsfläche kleiner als für weniger lyophobe Oberflächen. Da die Oberflächenspannung der flüssigen Phase auch von der Größe des Tröpfchens abhängt, ist für kleine Tropfen eine Benetzungsfläche zu beobachten, die im Verhältnis zum Tropfendurchmesser kleiner ist als für größere Tropfen.

Versieht man die Festkörperoberfläche wie in Abbildung 1B mit einem benetzungsfreundlichen (lyophilen) Fleck, dessen Durchmesser größer ist als die Benetzungsfläche des Tropfens auf der lyophoben Oberfläche, so wird der Tropfen genau diesen Fleck benetzen und an der Grenzfläche zur lyophoben Oberfläche einen Randwinkel α ausbilden, der kleiner ist als der Randwinkel ohne lyophilen Fleck. Dieser lyophile Fleck wird hier Anker genannt. Der Anker ist vorzugsweise rund ausgebildet. Dieser Fleck braucht nicht wirklich lyophil im absoluten Sinne zu sein, um diese Wirkung zu erzeugen; es genügt, dass er weniger lyophob ist als die Umgebung. Seine geringere Lyophobie muss einen Randwinkel besitzen, der kleiner ist als der des auf dem Fleck aufsitzenden Tropfens. Die Begriffe der Lyophilie und Lyophobie sind also relativ zueinander zu sehen, die Grenze von 90° für den Randwinkel als Abgrenzung zwischen Lyophobie und Lyophilie gilt hier nicht unbedingt.

Die Erfindung besteht nun darin, die Probe in einem Flüssigkeitstropfen zu prozessieren, der so auf einem lyophilen Anker in einer lyophoben Umgebung einer Unterlage steht, dass er den lyophilen Anker vollkommen benetzt, aber nicht die lyophobe Umgebung. Dieser erwünschte Benetzungszustand kann leicht durch richtige Wahl des Tröpfchenvolumens, der Ankergröße, und des Lyophobie-Unterschiedes zwischen Anker und Umgebung erreicht werden. Das Volumen des Tröpfchen oder Mikroreaktors kann dabei unter Einhaltung der Benetzungsbedingung in sehr weiten Grenzen schwanken, wie aus den Abbildungen 1 B und 1C ersichtlich. Dieser durch Oberflächenspannung zusammengehaltene Tropfen, sein lyophiler Anker, der lyophobe Rand um den Anker und das den Tropfen umgebende Gas bilden den Mikroreaktor für das Prozessieren, wobei die Wechselwirkung des lyophoben Umgebungsrandes mit dem Tropfen in der Praxis vernachlässigt werden kann, da sie nur wenige Moleküle in linearer Anordnung betrifft. Bei porösen Ankern gehört das Porenvolumen mit zum Mikroreaktor, die bei porösem Anker willkürlich vergrößerte Oberfläche kann für besondere Arten der Prozessierung, wie beispielsweise Ionenaustausch, oder für die Speicherung größerer Mengen an Analytmolekülen genutzt werden.

Es sind in jüngster Zeit mehrere Verfahren zur Erzeugung extrem hydrophober Oberflächen bekannt geworden, die sich für diese Erfindung einsetzen lassen. Neben der bereits bekannten Beschichtung mit perfluorierten Substanzen wie PTFE (beispielsweise mit Teflon®) gibt es Beschichtungen mit Lotos-Effekt (W. Barthlott und C. Neinhuis, "Purity of the sacred lotus, or escape from contamination in biological surfaces", Planta 202 (1997), 1) oder mit organisch-anorganischen Sol-Gel Nanocompositmaterialien (DE 41 18 184), siehe beispielsweise R. Kasemann, H. Schmidt, S. Brück, Bol. Soc. Esp. Ceram. Vid. 31-6, Vol. 7, (1992), 75. Die Nanocompositmaterialien lassen sich auf Metallen, Glas oder Kunststoffen als wenige Mikrometer dünne, kratzfeste Schichten einbrennen. Formteile aus geeigneten Kunststoffen wie beispielsweise Polyethylen lassen sich oberflächlich in einem durch elektrische Entladung erzeugten Fluorplasma perfluorieren. Auch Beschichtungen mit Teflon-artigen Materialien lassen sich durch Zugabe keramischer Bestandteile höchst kratzfest machen.

Für die vorliegende Erfindung ist bedeutsam, dass die noch vor einigen Jahren herrschende Lehre, die Oberflächen könnten in eine lineare Skala zwischen hydrophil (= lipophob oder auch oleophob) und hydrophob (= lipophil oder auch oleophil) eingeteilt werden, heute als überholt anzusehen ist. Sowohl die perfluorierten Oberflächen wie auch Bedeckungen mit Nanocompositmaterialien sind nicht nur hydrophob, sondern gleichzeitig auch lipophob und ganz allgemein lyophob für eine Reihe von wasserversetzten organischen Lösungsmitteln wie Alkoholen oder Acetonitril.

Das Prozessieren findet im Allgemeinen in waagerechter Ausrichtung der Unterlage statt, und zwar mit den Ankern auf der Oberseite. Es ist aber auch möglich, in hängenden Tropfen auf der Unterseite des Trägers zu prozessieren. Auch dann wird hier von "Unterlage" für die Tröpfchen und ihre Anker gesprochen. Die Unterlage für die lyophilen Ankern auf lyophober Oberfläche wird hier Träger genannt.

Die Erfindung betrifft dabei sowohl das Verfahren der Prozessierung im ankergebundenen Tropfen, wie auch die Träger mit lyophilen Ankern bestimmter Belegungsarten in lyophober Umgebung als Vorrichtung. Der Träger kann aus beliebigem Material sein, beispielsweise aus Metall, Glas oder Kunststoff. Die Oberfläche kann glatt, aber auch porös sein. Auch die Form ist beliebig; der Träger kann beispielsweise eine dünne Folie, eine Platte in Größe einer Mikrotiterplatte, aber auch ein mikrostrukturierter Chip sein. Träger in der Größe von Mikrotiterplatten haben den Vorteil, von kommerziell erhältlichen Pipettierrobotern prozessiert werden zu können. Ein Chip hingegen kann auch elektronische, fluidische oder andere Mikrostrukturen tragen, beispielsweise zur Unterstützung von analytischen Verfahren oder elektrochemischen Prozessierungsschritte. So können auf dem Chip in den Ankern beispielsweise Dioden für die Anregung der Fluoreszenz von Analytmolekülen in den Mikroreaktoren und Detektoren für ihren Nachweis enthalten sein. Auch Detektoren für Messungen der Chemolumineszenz, die bei Zugabe von Chemikalien bestimmte Analytmoleküle oder auch nur Analytmolekülformen nachweisen kann, können eingebaut werden. Das Konzept des "Lab-onthe-Chip" lässt sich mit den erfindungsgemäßen Mikroreaktoren, die sich von außen gut beladen lassen und somit das Konzept in eine dritte Dimension öffnen, in wertvoller Weise erweitern, vor allem auch dadurch, dass durch die außenliegenden Mikroreaktoren eine höhere Prozessierungsdichte erzeugt werden kann.

Die Träger sind zweckmäßigerweise mit automatisch lesbaren individuellen Kennungen versehen, die eine Verwechslung ausschließen und eine sehr genaue Verfolgung und Protokollierung der Proben und ihrer Prozessierung in den Bearbeitungsrobotern erlauben. Die Kennungen können beispielsweise aufgedruckte Barcodes oder auch eingearbeitete Transponder sein, die von den Bearbeitungsrobotern gelesen werden können.

Der Erstauftrag vieler verschiedenartiger Proben, die vielen einzelnen Probengefäßen aus mehreren Probentabletts entnommen werden müssen, auf einen Träger geschieht im Allgemeinen in Pipettenrobotern unter Wechsel der Pipettenspitzen Probe nach Probe und ist nicht unproblematisch, da der Probenauftrag in der Regel lange dauert und die Tröpfchen bei offener Betriebsweise leicht eintrocknen. Das kann man aber auch ausnutzen, indem man die Proben absichtlich trocknen lässt, gegebenenfalls in Schutzgas. Dadurch wird in der Regel der Träger mit den Proben lagerfähig, ohne dass sich die Proben zersetzen oder sonst verändern. Die Proben lassen sich später durch Zugabe von gleichartigen Reaktionsflüssigkeiten, die mit Vielfachsystemen simultan und schnell erfolgen kann, weiter zeitparallel prozessieren. Sind die Proben nicht trocken lagerfähig, so kann man die Proben auch auf einen gekühlten Träger aufbringen, auf dem sie kurz nach dem Aufbringen einfrieren.

Nach erstem Probenauftrag müssen in der Regel Flüssigkeiten, manchmal auch Gase zugegeben werden, wie Lösungsmittel, Lösungen mit Substanzen für chemische oder enzymatische Reaktionen, Steuerungssubstanzen für den Ablauf der Prozessierung (beispielsweise zur Änderung der pH-Werte), Puffersubstanzen und so weiter. Die weitere Zugabe erfolgt vorzugsweise berührungslos, um zusätzliche Wandkontakte und damit verbundene Störungen auszuschließen. Hierfür eignen sich prinzipiell folgende Methoden:

(a) die Zugabe von beliebigen Lösungen durch berührungsloses Dispensieren, wobei mit Piezo- oder Solenoid-Mikrodispensern oder auch Bubble-Jet-Systemen analog zur Tintenstrahldrucktechnik kleinste, aber wohldefinierte Flüssigkeitstropfen im Bereich von 50 bis 100 Picoliter Volumen berührungslos auf das Zielsubstrat platziert werden,

(b) die Zugabe reinen Lösungsmittels mittels Kondensation aus übersättigter Dampfphase durch den Einsatz einer Feuchtigkeitskammer oder eines unten beschriebenen Verteilerdeckels,

(c) die Zugabe von gasförmigen, löslichen Reaktant- oder Regulationssubstanzen (zum Beispiel Ammoniak, Kohlendioxid, Stickoxide) aus der umgebenden Gasphase, die auch durch ein entsprechendes Deckelsystem zugeführt werden können, und

(d) die Zugabe von Reaktionslösungen oder Lösungsmitteln durch einfaches Aufsprühen, wobei sich die Flüssigkeit von den lyophoben Flächen auf die lyophilen Flächen und somit zu den Probentröpfchen zurückzieht.

Nicht berührungsfrei kann durch folgende Verfahren aufgetragen oder zugefügt werden:

(e) durch einfaches Tauchen der Träger, beispielsweise um einen Grundauftrag mit Reaktanten vor dem eigentlichen Probenauftrag zu erhalten,

(f) durch synchrones Pipettieren mit Vielfachpipettenköpfen, wobei die Pipettenspitzen zweckmäßigerweise stark lyophob zu wählen sind, um die Tropfen gut absetzen zu können,

(g) durch Stempeln, beispielsweise mit "Pin-Tools", bei denen die Flüssigkeiten an Nadelspitzen hängen, oder

(h) durch fluidische Schaltungen auf dem Chip, die dem Tröpfchen Flüssigkeitsmengen durch den Anker hindurch zuführen und entnehmen können.

Die Zugabe von Flüssigkeiten kann erfolgen, um Flüssigkeitsverluste durch Verdampfung auszugleichen und somit das Volumen der erzeugten Reaktionsräume zeitlich konstant zu halten, um Reaktionsmittel hinzuzugeben oder um die Reaktionsvolumina zeitlich gezielt zu verändern. Die Veränderbarkeit der Reaktionsvolumina erlaubt die kontinuierliche zeitliche Anpassung der Reaktionsvolumina an den Verlauf darin ablaufender chemischer Stoffumsetzungen. Es lassen sich somit zum Beispiel lineare Abnahmen durch Abdampfen, exponentielle Anstiege, oder periodische Verläufe realisieren.

Statt der Lösungen können auch wässrige Suspensionen oder Aufschlämmungen aufgetragen werden, die zum Beispiel Gelstückchen (mit Proteinen aus gelelektrophoretischen Trennungen), Gewebeproben, Viren, Zellen, Zellaggregate oder kleine feste oder gelartige Partikel für Affinitätsaufreinigungen, Anreicherung oder oberflächenkatalysierte Stoffumsetzung enthalten.

Es ist ein wichtiger Gesichtspunkt der Erfindung, dass mit dem Entfernen der aufgebrachten Flüssigkeitströpfchen auch die Reaktionsräume wieder verschwinden. Diese sind somit in ihrer Natur temporäre Gebilde und unterscheiden sich damit grundlegend von starren Behältnissen. Die Träger sind im Prinzip wiederverwendbar, wenn sie sich von allen Analyt- und/oder Reaktantmolekülen genügend gut reinigen lassen.

Werden viele Reaktionsräume auf einem gemeinsamen Träger erzeugt, bestimmt der kleinste Abstand zwischen benachbarten Räumen deren maximale Ausdehnung, und damit das maximale Reaktionsvolumen. Die Reaktionsräume können Volumina im Bereich von zehn Picoliter bis maximal etwa zehn Mikroliter umfassen und in großer Zahl auf ein und denselben Träger aufgebracht werden. Die Positionskoordinaten der Reaktionsräume sind durch das Design der Oberfläche fest vorgegeben. Es können auf einem Träger außerordentlich hohe Anzahlen an Mikroreaktoren für die Prozessierung untergebracht werden. Selbst bei relativ großen Volumina von 500 Nanolitern, die Tropfen mit einem Millimeter Durchmesser ergeben, können auf einem Träger der Größe einer Mikrotiterplatte mit einem Rasterabstand von 1,5 Millimetern 3456 Tropfen untergebracht werden. Moderne Piezodispenser können aber Tröpfchen wesentlich geringerer Volumina erzeugen.

Die hier definierten Mikroreaktoren in Tröpfchenform sind der Gefahr des Austrocknens ausgesetzt. Man muss sie daher in besonderer Weise schützen, beispielsweise, indem man den gesamten Träger in einen Raum gesättigten Dampfdrucks für das Lösungsmittel hält. Im Allgemeinen wird es sich bei biochemischer Prozessierung um Wasser als den Hauptbestandteil der Lösung handeln. Dann muss besondere Vorsicht walten, da Wasserdampf leichter als Luft ist, die wassergesättigte Luft nach oben strebt und trockenerer Luft Platz macht.

Sehr kleine Tröpfchen haben einen sehr hohen Dampfdruck, der weit über den Sättigungsdampfdruck des Lösungsmittels hinausgehen kann. Bei Benutzung solcher winzigen Mikroreaktoren müssen daher besondere Maßnahmen ergriffen werden, die die Tröpfchen selbst in gesättigten Dampfräumen vor zu schneller Verdunstung retten. Beispielsweise können dazu in bekannter Weise Zusätze zu der Lösung verwendet werden, die den Dampfdruck der Lösung herabsetzen. Man kann dadurch sogar ein Gleichgewicht mit dem umgebenden Dampfräum so herstellen, dass sich die Tröpfchengröße selbst einstellt und erhält. Andererseits ist es auch möglich, durch Zugabe von schlecht verdampfbaren amphiphilen Substanzen in geringsten Mengen eine Oberflächenschicht auf den Tröpfchen zu erzeugen, die den Durchtritt des Lösungsmittels und damit eine Verdunstung vermindert, wenn nicht sogar verhindert.

In jedem Fall aber ist es günstig, die Träger während des Ablaufs längerdauernder Prozessierungsschritte mit dicht schließenden Deckeln zu versehen, wie in Abbildung 2 dargestellt. Sollen beispielsweise Temperaturzyklen für PCR-Amplifikationen durchlaufen werden, so ist eine solche Deckelung zwingend. Umfasst der Deckelraum etwa zwei Millimeter über einem Träger in der Größe einer Mikrotiterplatte, so nimmt die Luft im Deckelraum bei Erwärmung von 50 auf 90 Grad Celsius etwa 8 Milligramm Wasser auf, die bei Abkühlung wieder an die Tröpfchen zurückgegeben werden. Befinden sich hier 1536 Tröpfchen zu je einem halben Milligramm, so sind Verdunstung und Wiederkondensation kaum zu bemerken. Da jedoch der Dampfdruck von der Tröpfchengröße abhängt, kann es bei vielen Zyklen sehr leicht zu Ungleichgewichten kommen, größere Tröpfchen nehmen dann auf Kosten der kleineren Tröpfchen zu. Hier kann es zweckmäßig sein, den Deckel mit Kammern zu versehen, die jeweils einzelne Tröpfchengruppen oder sogar einzelne Tröpfchen umschließen.

Der Deckel für die Träger kann aber auch Zu- und Abführungssysteme für Gase und Dämpfe enthalten, wie sie ebenfalls in Abbildung 2 dargestellt sind. Dabei kann ein Verteilungssystem im Deckel dafür sorgen, dass ein gleichmäßiges Erreichen aller Tröpfchen gewährleistet wird. So können beispielsweise Ammoniak, Kohlendioxid oder Stickstoffoxide für Steuerung des pH-Wertes zugeführt werden, ohne dass einzelne Tröpfchen in der Nähe einer Zuführungsöffnung übersättigt und andere nicht erreicht werden.

Durch einen Teiltrocknungsprozess in trockener Luft beginnen in den Tröpfchen sehr schnelle und unregelmäßige Jet- und Wirbelströme zu fließen, diese bilden einen äußerst effektiven Misch- und Umrührprozess, der die Reaktionen in den Mikroreaktoren beschleunigt. So können insbesondere alle Flüssigkeitsmoleküle in kurzer Zeit einmal mit der Ankeroberfläche in Berührung gebracht werden, wenn bestimmte Oberflächenprozessierungen an den Ankern erfolgen sollen. Die dadurch verkleinerten Tröpfchen können durch Dispensersysteme berührungslos wiederaufgefüllt oder mit weiteren Reaktantlösungen versehen werden. Die trockene Luft für diesen Prozess kann ebenfalls über das Verteilsystem im Deckel zugeführt werden, ebenso wie die dampfgesättigte Luft zum Anhalten des Teiltrocknungsprozesses.

Für das Übertragen der Tröpfchen von einem Träger auf einen anderen können Vielfachpipetten eingesetzt werden, es bieten sich aber auch andere Methoden an. Durch vorsichtiges Umdrehen von Trägern, eventuell nach Einfrieren, können die dann hängenden Tropfen auch durch direkten Kontakt schwerkraftunterstützt von einem Träger zum anderen übertragen werden, wobei durch einen Rahmen eine genaue Justierung von Position und Abstand gewährleistet werden kann, wie in Abbildung 3 gezeigt. Eine Federung im Rahmen mit Abstandsstopp erlaubt eine manuelle Handhabung der vorsichtigen Kontaktherstellung mit anschließendem Ablösen. Besonders einfach gelingt das Umdrehen der Träger, wenn sie sich im zusammengepressten Zustand wie in Abbildung 3B befinden. Dabei beginnt man mit stehenden Tröpfchen auf einer Geberplatte, bringt die Empfängerplatte von oben in Kontakt, dreht das Plattensandwich um, und hebt die jetzt oben befindliche Geberplatte vorsichtig ab. Je nach der Größe der Anker und ihrer Lyophilität werden schwerkraftunterstützt unterschiedliche Anteile der Tröpfchen übertragen, es lässt sich aber eine gute Reproduzierbarkeit der übertragenen Volumina erreichen.

Diese simultane Übertragung von vielen Tröpfchen kann auch genutzt werden, Reaktionsmittel aus Vielfachpipetten auf probenbeladene Träger ohne Verschmutzung der Pipetten aufzutragen. Es wird dabei die Reaktionslösung mit der Vielfachpipette erst auf einen sauberen Träger mit lyophilen Ankern aufgetragen, und die Tröpfchen dieses Trägers werden dann durch die beschriebene Kontaktübertragung in einem Schritt auf die probenbeladene Trägerplatte übertragen. Durch diese einfache Technik ist es möglich, die bisher bereits entwickelten Pipettenköpfe mit 96 oder sogar 384 Pipetten weiter vollkommen verschmutzungsfrei zu benutzen. Auch die Entwicklung von Pipettenköpfen mit 1536 Pipetten ist denkbar und brauchbar. Eine solche Entwicklung könnte sogar von der Erfindungsidee Gebrauch machen, indem mikrostrukturierte Träger mit lyophilen Ankern und fluidischem Flüssigkeitstransport durch die Trägerplatte zu den Ankerflächen versehen werden. Da sehr oft viele Träger mit der gleichen Reaktionsflüssigkeit versehen werden müssen, ist eine solche Entwicklung lohnend. Ein Beispiel ist die Reaktionsflüssigkeit für PCR-Vervielfältigungen von DNA, die ohne die spezifischen Primer aufgetragen werden kann und somit für alle PCR-Prozesse immer gleich ist.

Die zusammengepresste Stellung der Platten, wie in Abbildung 3B gezeigt, kann auch für elektrophoretische Übertragungen von Substanzen genutzt werden, wenn Flüssigkeit und eventuelle Isolierschichten auf den Ankern geeignet sind, Elektrolyse zu vermeiden. Durch eine starkes elektrisches Feld zwischen den Trägern können oberflächengebundene Substanzen von einer Trägerplatte zur anderen transferiert werden. Frei gelöste Substanzen können zu den Ankern eines Trägers geführt werden. Es können aber auch Proteine aus Gelstückchen durch Elektrophorese auf die Anker eines Trägers überführt werden.

Die Sandwichanordnung zweier Träger nach Abbildung 3B kann auch für eine PCR-Vervielfältigung verwendet werden, da sich dadurch die Wärmezuführung zu den Tröpfchen stark beschleunigen lässt.

Eine Sandwichanordnung von zwei Trägern ohne Tröpfchenkontakt in genügendem Abstand kann auch für die berührungslose Übertragung der Tröpfchen durch einen einmaligen Schüttelvorgang verwendet werden. Gerichtetes Beschleunigen und Abbremsen kann die Tröpfchen durch ihre Trägheit gezielt synchron ablösen und auf die gegenüberstehenden Anker bringen. Roboter können diese Bewegungen mit großer Präzision ausführen.

Diese Verfahren der einfachen Übertragung der Tröpfchen erlauben den Einsatz unterschiedlich funktionalisierter Träger. Zum Beispiel kann zuerst ein transparenter Träger für optische Detektionsmethoden eingesetzt werden und danach ein metallischer, elektrisch leitender Träger für MALDI-MS Analysen.

Die lyophilen Anker der Träger können ebenfalls in vielfältiger Weise durch Präparationen funktionalisiert werden. So können Analytmoleküle an geeignet mit Akzeptormolekülen präparierten Ankern durch Adsorption, durch Affinität, durch chemische Bindungen, durch Hybridisierung (DNA) oder durch Antikörperbindungen vorübergehend oder dauernd immobilisiert werden. Peptide können beispielsweise aus geeigneten Pufferlösungen pH-gesteuert an C18-präparierten Ankern adsorbiert und durch Veränderung des pH-Wertes oder durch organische Lösungsmittel wieder desorbiert werden. Im immobilisierten Zustand können die Analytmoleküle Reaktionen unterworfen, hybridisiert, enzymatisch verlängert oder verkürzt, oder einfach nur durch Waschen von Reaktantlösungen befreit werden. Es können beispielsweise aber auch Schichten zur langsamen Abgabe von Reaktantmolekülen oder zum Fangen schädlicher Reaktionsprodukte oder bestimmter Verschmutzungen aufgebracht werden, beispielsweise können Ionenaustauscher zum Einfangen von Metallionen dienen.

Die immobilisierten Moleküle können zum Beispiel mit Pufferlösungen, die sie immobil halten, in ähnlicher Weise gewaschen werden, wie das heute durch den Einsatz von "Magnetic Beads" bekannt ist. Das Waschen kann in einzelnen Tröpfchen auf den Ankern geschehen, aber auch gemeinsam in einem Bade oder unter einer Dusche für alle Anker eines Trägers.

Die Anker können aber auch durch besondere Ausgestaltung für besondere Arten von Analysen benutzt werden. Die Anker auf Siliziumchips können beispielsweise direkt mit elektronischen Schaltungen für Oberflächenanalysenverfahren wie "Surface Plasmon Resonance" oder "Surface Acoustic Waves" ausgelegt werden. Für optische Methoden können die Anker (eventuell die ganzen Träger) durchsichtig oder spiegelnd ausgeführt werden. Die Proben können teils in flüssigem, teils in getrocknetem Zustand in vielfältiger Weise analysiert werden, beispielsweise colorimetrisch, absorptionsspektrometrisch (auch im UV oder IR), fluoreszenzspektrometrisch, radiographisch oder massenspektrometrisch. Es können bestimmte Reaktionen durch Chemolumineszenz oder Thermolumineszenz, oder DNA-Hybridisierungsschmelzpunktkurven durch Farbumschläge gemessen werden. Besonders im zusammengepressten Zustand nach Abbildung 3B zwischen zwei durchsichtigen Trägern (oder auch nur mit durchsichtigen Ankern versehenen Trägern) ist eine gute Durchstrahlung der Tröpfchen möglich, zum Beispiel für Absorptionsmessungen.

Gegenüber gefäßgebundener Prozessierung hat das hier vorgestellte Verfahren den einzigartigen Vorteil, dass die Wandkontaktfläche über weite Veränderungsbereiche des Volumens der Flüssigkeit hin immer gleich groß bleibt. Damit wird vermieden, dass es Gefäßwandränder gibt, die durch Kriechen der Flüssigkeit, durch Trockenfallen oder durch ausdehnungsbedingte Wandkontaktveränderungen adsorbierte oder auskristallisierte Reste der Reaktionslösung tragen. Dadurch wird auch die Nachweisempfindlichkeit verschiedener Detektionstechniken verbessert, da Hintergrundsignale aufgrund unspezifischer Adsorption von Probenmolekülen außerhalb der für die spezifische Anbindung präparierten Fläche ausgeschlossen werden. Dies verbessert das Signal-zu-Rauschverhältnis und damit die Nachweisempfindlichkeit.

Durch Trocknen oder Einfrieren können die Proben auch für längere Zeit lagerfähig gemacht werden. Bei geeigneter Ausführung der Trägerunterfläche als Deckel für die jeweils darunter liegenden Träger lässt sich — wie bei Mikrotiterplatten — eine hohe Packungsdichte für die Lagerung erreichen.

Neben den bisher schon aufgeführten Vorteilen hat das erfindungsgemäße Prozessieren aber auch die Vorteile großer Einfachheit und geringer Kosten. Die Prozessierungen können weitgehend auf bereits heute erhältlichen Pipettenrobotern ausgeführt werden, wenn nur erst einmal die erfindungsgemäßen Träger zur Verfügung stehen. Die geringen Prozessierungsvolumen senken die Kosten für die einzusetzenden Chemikalien.

Zwei Beispiele sollen das Prozessieren im Detail darstellen. Beide Beispiele sind dem Bereich der Massenspektrometrie entnommen, es ist jedoch dem biochemischen oder molekularbiologischen Fachmann ein Leichtes, diese Beispiele auf die von ihm benötigten Prozessierungs- und Analysenschritte zu übertragen.

Das erste Beispiel betrifft das bereits oben geschilderte Verfahren zur Analyse eines Proteoms. Zunächst werden die Eiweiße eines Zellverbandes 2D-gelelektrophoretisch getrennt, mit einem Färbemittel angefärbt, die den nachfolgenden Verdau nicht stört, und in einer automatisch arbeitenden Vorrichtung aus dem Gel in runden Gelstückchen von 0,5 bis 0,8 Millimeter Durchmesser ausgestochen. Die feuchten Gelstückchen werden vom Stanzroboter automatisch auf den lyophilen Ankern einer erfindungsgemäßen Trägerplatte abgelegt, wo sie kleben bleiben. In einer einfachen, nicht besonders verfeinerten Ausführung befinden sich 1536 lyophile Anker mit jeweils 0,6 Millimeter Durchmesser in stark lyophober Umgebung auf einem vernickelten Aluminiumträger in Größe einer Mikrotiterplatte. In der Mitte der unbelegten Nickelanker befinden sich jeweils C18-Belegungsflecken mit Durchmessern von etwa 200 Mikrometern für das spätere Adsorbieren der Verdaupeptide. Der Ring hydrophilen Nickels um die hydrophobe C18-Belegung herum gewährleistet den Kontakt der später aufzubringenden Flüssigkeit mit dem Anker.

Die feuchten Gelstückchen werden jetzt zunächst vorsichtig angetrocknet. Dabei findet eine Dickenschrumpfung der aufliegenden Gelstückchen statt. Die anschließende Zugabe einer Trypsinlösung mit entsprechenden Puffern (beispielsweise durch eine simultane Kontaktübertragung von einer zuvor mit Vielfachpipette beladenen Trägerplatte) lässt die Gelstückchen wieder aufquellen, wodurch das Verdauenzym Trypsin zu den Proteinen im Gel gebracht wird. Ein Überschuss an Flüssigkeit im Gesamtvolumen von 500 Nanolitern lässt die Gelstückchen in den ein Millimeter dicken Tröpfchen aufschwimmen.

Die Trägerplatten werden dann mit dicht abschließenden Deckeln versehen und für etwa 12 Stunden in einem Wärmeschrank bei 37 Grad Celsius aufbewahrt. Dabei werden die Proteine durch das Trypsin verdaut, die Verdaupeptide diffundieren aus dem Gel aus und werden schließlich auf der C18-Insel adsorbiert. Ein Teiltrocknungsvorgang am Ende der Verdauzeit lässt die Tröpfchen noch einmal kräftig durcheinanderwirbeln, so dass alle freischwimmenden Peptide an der C18-Insel eingefangen werden. Die Gelstückchen werden jetzt einfach abgewaschen, die im adsorbierten Zustand gewaschenen Peptide werden getrocknet.

Eine Lösung von α-Cyano-4-Hydroxy-Zimtsäure in 30 % Acetonitril und Wasser desorbiert die Verdaupeptide und baut sie in die als MALDI-Matrix dienenden Kriställchen der Zimtsäure ein, die sich während des Trocknens bilden. Die getrocknete Trägerplatte ist nun fertig für die Aufnahme eines MALDI-Flugzeitmassenspektrums der Verdaupeptide. Aus deren genau bestimmten Massen lässt sich das Protein in einer Proteinsequenzdatenbank in üblicher Weise suchen.

Ein Proteom mit etwa 4500 Proteinen lässt sich in etwa vier bis fünf Stunden automatisch ausstechen und auf den drei erforderlichen Trägern präparieren. Wenn Verdau und Extraktion der Peptide über Nacht erfolgen, können die Verdaupeptide am nächsten Tag automatisch im Massenspektrometer gemessen werden, wozu bei heute erhältlicher Technik etwa 12 Stunden erforderlich sind. Die Identifizierung erfolgt in Echtzeit während der Spektrenaufnahme der nächsten Probe. Nicht eindeutig bestimmte Proteine können anschließend durch die Aufnahme von PSD-Tochterionenspektren einzelner Verdaupeptide endgültig bestimmt werden, wozu etwa weitere 12 Stunden notwendig sein werden. Verluste durch wandadsorbierte Peptide treten mit der erfindungsgemäßen Technik praktisch nicht auf.

Diese Methode mit erfindungsgemäßer Prozessierung hat folgende Vorteile:

(1) Die Analyse eines Proteoms kann in etwa zwei bis drei Tagen abgeschlossen werden, wodurch weitgehend vermieden wird, dass sich die empfindlichen Proteine, die sich nur in der natürlichen Umgebung in ihrer Zelle stabil halten, zersetzen und damit nicht mehr analysiert werden können.

(2) Die Analyse ist außerordentlich einfach, sehr schnell und durch die geringen Volumina mit geringem Verbrauch an Chemikalien auch preiswert.

(3) Gegenüber bisher üblicher Prozessierung in Gefäßen gibt es eine wesentlich höhere Wiederfindungsrate für die einzelnen Verdaupeptide eines Proteins. Besonders die stark hydrophoben Peptide gingen bei bisheriger Technik häufig durch Wandeinflüsse verloren; sie wurden in der massenspektrometrischen Messung gar nicht mehr gefunden. Da die Proteomforschung sich in zunehmender Weise auf die Abweichungen zwischen realen Proteinen und den Sequenzen der Proteindatenbanken konzentriert, sind diese Verluste an Verdaupeptiden nicht mehr hinzunehmen.

Das zweite Beispiel betrifft die Analyse des Genoms auf bestimmte Mutationen hin, die als so genannte SNPs (Single Nucleotide Polymorphisms) vorliegen. Im menschlichen Genom gibt es mindestens 2 Millionen solcher SNPs. Sie charakterisieren Anlagen zu Krankheiten oder lassen Unverträglichkeiten für Medikamente erkennen. Sie können aber auch erkennungsdienstlich zur Erkennung von Täter- oder Vaterschaft verwendet werden. Etwa 40 geeignet ausgesuchter SNPs bestimmen als genetischer Fingerabdruck eindeutig einen Menschen oder ein Tier.

Für die Messung solcher genetischer Fingerabdrücke werden jeweils 1536 lysierte Mundabstriche als DNA-Proben von einem Pipettierroboter aus Normfläschchen auf jeweils 40 Trägerplatten pipettiert. Je eine der vier Millimeter starken Trägerplatten aus dünn vergoldetem Aluminium mit 1536 unbelegten Goldankern in stark lyophiler Umgebung dient zur simultanen Messung je einer bestimmten Mutation in den 1536 Proben. Es wird dann auf alle Platten eine Lösung dispensiert, die die Polymerase für die nachfolgende PCR-Vervielfältigung, die Nucleotidtriphosphate und die notwendigen Puffer und Aktivatoren enthält. Dazu kann die oben beschriebene Technik der indirekten Übertragung mit Kontaktträgern benutzt werden, die durch Vielfachpipetten beladen wurden. Die mutationsspezifischen Primer werden für jede Trägerplatte getrennt aufgetragen, beispielsweise durch eine Bubble-Jet-Druckerleiste. Die Platte wird mit einem Aluminiumdeckel abgedeckt, und mit vier anderen Platten, die unter gleichen Temperaturbedingungen prozessiert werden können, auf eine Heizplatte gelegt. Ein zweite Heizplatte kann auf die Deckel platziert werden, um eine gleichmäßige Erwärmung zu gewährleisten. Diese Sandwichanordnung wird nun den Temperaturzyklen zwischen etwa 50° und 90° Celsius unterworfen, die für die PCR-Vervielfältigung notwendig sind. Wegen der guten thermischen Leitfähigkeit und der geringen thermischen Masse braucht ein Zyklus hier nur etwa anderthalb Minuten, die üblichen 30 Zyklen also eine dreiviertel Stunde. Die DNA-Proben der 40 Trägerplatten können also in dieser einfachen Anordnung in etwa 8 Stunden amplifiziert sein.

Statt Heizplatten zu verwenden, können auch etwas dickere Träger- und Deckelplatten mit eingebauten Heiz- und Kühlsystemen verwendet werden. So kann beispielsweise ein einfaches Durchflusssytem für Heiz- und Kühlwasser in den Trägern und ihren Deckeln installiert sein. Auch Temperaturfühler lassen sich integrieren, um eine gute Temperaturregelung zu gewährleisten.

Umfasst der Deckelraum etwa zwei Millimeter über einem Träger in der Größe einer Mikrotiterplatte, so nimmt die Luft im Deckelraum bei Erwärmung von 50 auf 90 Grad Celsius etwa 8 Milligramm Wasser auf, die bei Abkühlung wieder an die Tröpfchen zurückgegeben werden. Befinden sich hier 1536 Tröpfchen zu je einem halben Milligramm, so sind Verdunstung und Wiederkondensation kaum zu bemerken.

Die Proben auf den Trägerplatten werden nach ihrer PCR-Vervielfältigung auf neue Trägerplatten übertragen, die mit Ankern versehen sind, die die DNA-Amplifikate binden können, so dass sie in ionenfreiem Wasser gewaschen und von allen bisherigen Reaktionslösungsbestandteilen befreit werden können. Die anschließend getrockneten Proben werden dann mit einem verdampfbaren Lösungsmittel wieder gelöst (beispielsweise mit einem Wasser-Acetonitril-Gemisch) und auf den inzwischen gereinigten Träger für die PCR-Vervielfältigung rücküberträgen. Nach dem Trocknen der DNA-Amplifikate werden nun Primer, Polymerase, terminierende und nichtterminierende Nucleotidtriphosphate und Puffer für eine beschränkte, mutationsspezifische Primerverlängerung aufgebracht, die nach einigen weiteren Temperaturzyklen zu DNA-Produkten führt, deren Länge die Mutation wiederspiegelt. Übertragung auf einen Waschträger, der auch gleichzeitig für die Zugabe der Matrix für die Ionisierung durch matrixunterstützte Laserdesorption (MALDI) eignet, Waschen und Matrixzugabe schließt die Prozessierung ab, die für die 40 Trägerplatten noch einmal etwa 8 Stunden in Anspruch nehmen wird.

Die Proben können in einem modernen Massenspektrometer mit automatischer Plattenzuführung in einem Messtakt von nur zwei Sekunden vermessen werden, was etwa 48 Stunden Maschinenzeit ohne Personalzeit in Anspruch nimmt. Somit können 1536 genetische Fingerabdrücke in nur zwei Personalschichten gemessen werden.

Fachleute erwarten, dass sich dieses Verfahren der beschränkten Primerverlängerung multiplexieren lässt; es ist bereits eine beispielhafte Zehnfachmultiplexierung veröffentlicht worden. Werden nur jeweils vier SNPs in einer Prozessierungsprobe gleichzeitig gemessen, so lassen sich damit über 3000 genetische Fingerabdrücke in einer Personalschicht (8 Personalstunden) und einem Maschinentag messen.

Ein Vorteil dieser Prozessierung im stehenden Tröpfchen liegt aber neben der Einsparung von Personaleinsatz auch in der Einsparung von Chemikalien und Enzymen. Die bisher angewandten PCR-Reaktionen waren auf Minimalvolumen von 5 Mikrolitern beschränkt. Damit ist eine Einsatzmenge von Polymerase verbunden, die sich nicht unterschreiten lässt und (wegen der Lizenzen für PCR-Patente, die über den Preis der Polymerasen eingetrieben werden) den Preis bestimmt. Mit dem erfindungsgemäßen Prozessieren lässt sich aber das Reaktionsvolumen — und damit auch der Chemikalienpreis — auf ein Zehntel oder weniger reduzieren.

Jedem Fachmann auf dem Gebiet des Mikroprozessierens wird es mit den Kenntnissen über diese Erfindung und ihre Anwendung möglich sein, seine speziellen Bedürfnisse an Prozessierungen mit den hier angegebenen Grundprinzipien zu verwirklichen, auch wenn die spezielle Art der Prozessierung hier nicht beschrieben sein sollte.

Die in der vorstehenden Beschreibung, den Ansprüchen sowie den Zeichnungen offenbarten Merkmale der Erfindung können sowohl einzeln als auch in beliebiger Kombination für die Verwirklichung der Erfindung in ihren verschiedenen Ausführungsformen wesentlich sein.

**Ausführungsformen**

**Ausführungsform 1:** Verfahren für das Prozessieren von Probenmolekülen in kleinen Mengen von Flüssigkeiten, dadurch gekennzeichnet, dass das Prozessieren in Tröpfchen stattfindet, die frei auf lyophilen Ankern einer ansonsten lyophoben Trägeroberfläche stehen oder an ihnen hängen.

**Ausführungsform 2:** Verfahren nach Ausführungsform 1, dadurch gekennzeichnet, dass die lyophilen Anker so präpariert sind, dass sie definierte Oberflächeneigenschaften zeigen.

**Ausführungsform 3:** Verfahren nach Ausführungsform 2, dadurch gekennzeichnet, dass die lyophilen Anker mit Schichten präpariert sind, die die Probenmoleküle immobilisieren können.

**Ausführungsform 4:** Verfahren nach Ausführungsform 3, dadurch gekennzeichnet, dass die Immobilisierung reversibel ist.

**Ausführungsform 5:** Verfahren nach Ausführungsform 2, dadurch gekennzeichnet, dass die lyophilen Anker mit Schichten präpariert sind, die Substanzmoleküle in die Lösung abgeben oder Substanzen aus der Lösung entfernen.

**Ausführungsform 6:** Träger mit lyophilen Ankern in lyophober Umgebung für die Ausführung des Verfahrens nach Ausführungsform 3 oder 4, dadurch gekennzeichnet, dass die lyophilen Anker mit Schichten belegt sind, die Probenmoleküle reversibel oder nichtreversibel binden und damit mindestens zeitweise immobilisieren können.

**Ausführungsform 7:** Träger mit lyophilen Ankern in lyophober Umgebung für die Ausführung des Verfahrens nach Ausführungsform 5, dadurch gekennzeichnet, dass die lyophilen Anker mit Schichten beleg sind, die Substanzmoleküle in die Lösung abgeben oder aus ihnen entfernen.

**Ausführungsform 8:** Träger mit lyophilen Ankern in lyophober Umgebung auf einem Träger für die Ausführung des Verfahrens nach Ausführungsform 1 bis 5, dadurch gekennzeichnet, dass in den Träger elektrische, optische, fluidische, akustische oder mikromechanische Elemente für die Prozessierung integriert sind.

**Ausführungsform 9:** Träger mit lyophilen Ankern in lyophober Umgebung für die Ausführung des Verfahrens nach Ausführungsform 1 bis 5, dadurch gekennzeichnet, dass die lyophilen Anker als optische Fenster oder Spiegel ausgebildet sind.

**Ausführungsform 10:** Träger mit lyophilen Ankern in lyophober Umgebung für die Ausführung des Verfahrens nach Ausführungsform 1 bis 5, dadurch gekennzeichnet, dass die Träger einen Deckel besitzen und dass im Deckel Zu- und Abführungsleitungen für Gase und Dämpfe enthalten sind, die die zugeführten Gase oder Dämpfe in die Nähe eines jeden Tröpfchens bringen.

**Ausführungsform 11:** Träger nach Ausführungsform 7 bis 10, dadurch gekennzeichnet, dass er die Größe einer Mikrotiterplatte hat.

**Patentansprüche**

1. Verfahren für das Prozessieren von Probenmolekülen in kleinen Mengen von Flüssigkeiten, **dadurch gekennzeichnet, dass** das Prozessieren in einem Tropfen stattfindet, der frei auf einem lyophilen Anker einer ansonsten lyophoben Trägeroberfläche steht oder an ihm hängt, und wobei eine weitere Flüssigkeit berührungslos zugegen wird.

2. Verfahren nach Anspruch 1, **dadurch gekennzeichnet, dass** die Flüssigkeit ein Flüssigkeitstropfen ist.

3. Verfahren für das Prozessieren von Probenmolekülen in kleinen Mengen von Flüssigkeiten, **dadurch gekennzeichnet, dass** das Prozessieren in einem Tropfen stattfindet, der frei auf einem lyophilen Anker einer ansonsten lyophoben Trägeroberfläche steht oder an ihm hängt, und wobei ein weiterer Reaktand berührungslos zugegen wird.

4. Verfahren nach Anspruch 1, **dadurch gekennzeichnet, dass** der weitere Reaktand in einem Flüssigkeitstropfen enthalten ist.

5. Verfahren nach einem der Ansprüche 1 bis 4, **dadurch gekennzeichnet, dass** der Flüssigkeitstropfen ein Volumen von 50 bis 100 pl aufweist.

6. Verfahren nach einem der Ansprüche 1 bis 5, **dadurch gekennzeichnet, dass** die berührungslose Zugabe durch berührungsloses Dispergieren erfolgt.

7. Verfahren nach einem der Ansprüche 1 bis 6, **dadurch gekennzeichnet, dass** die Zugabe durch einen Piezo-Mikrodispenser, einen Solenoid-Mikrodispenser oder ein Bubble-Jet-System erfolgt.

8. Verfahren nach einem der Ansprüche 1 bis 7, **dadurch gekennzeichnet, dass** der Tropfen ein Volumen von 10 pl bis 10 nl aufweist.

9. Verfahren nach einem der Ansprüche 1 bis 8, **dadurch gekennzeichnet, dass** die lyophilen Anker so präpariert sind, dass sie definierte Oberflächeneigenschaften zeigen.

10. Verfahren nach einem der Ansprüche 1 bis 9, **dadurch gekennzeichnet, dass** die lyophilen Anker mit Schichten präpariert sind, die die Probenmoleküle immobilisieren können.

11. Verfahren nach Anspruch 10, **dadurch gekennzeichnet, dass** die Immobilisierung reversibel ist.

12. Verfahren nach einem der Ansprüche 1 bis 9, **dadurch gekennzeichnet, dass** die lyophilen Anker mit Schichten präpariert sind, die Substanzmoleküle in die Lösung abgeben oder Substanzen aus der Lösung entfernen.

Fig. 1A, 1B und 1C

Fig. 2

Fig. 3A, 3B und 3C

Fig. 4

Fig. 5A

Strahlengang

Fig. 5B

Strahlengang

Fig. 6A

Fig. 6B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19754978
- DE 19923761
- DE 19628178
- DE 4118184


**In der Beschreibung aufgeführte Nicht-Patentliteratur**

- **W. BARTHLOTT ; C. NEINHUIS.** Purity of the sacred lotus, or escape from contamination in biological surfaces. *Planta,* 1997, vol. 202, 1
- **R. KASEMANN ; H. SCHMIDT ; S. BRÜCK.** *Bol. Soc. Esp. Ceram. Vid. 31-6,* 1992, vol. 7, 75